# EUROPÄISCHE PATENTANMELDUNG

(11) **EP 0 884 216 A2**
(43) Veröffentlichungstag der Anmeldung: **16.12.1998**
(21) Anmeldenummer: 98810520.1
(22) Anmeldetag: 09.06.1998
(51) Int. Cl.: B60Q 1/14

(54) **Fahrzeugbeleuchtung mit einer Einrichtung zum Verhindern der Blendwirkung**

(30) Priorität: 10.06.1997 CH 1405/97
(71) Anmelder: Jesag, 3762 Erlenbach (CH)
(72) Erfinder: Jutzeler, Andreas, 3762 Erlenbach (CH)
(74) Vertreter: BOVARD AG - Patentanwälte

(57) **Zusammenfassung**

Es ist eine Aufgabe der vorliegenden Erfindung, eine Fahrzeugbeleuchtung mit einer Einrichtung zum Verhindern der Blendwirkung anzugeben, die einfach aufgebaut und mit geringem Verdrahtungsaufwand einzubauen ist. ferner soll ein Fahrzeug auch nachträglich mit einer solchen Beleuchtung ausgerüstet werden können, ohne dass an einer Leuchte Änderungen vorgenommen werden müssen. Die Aufgaben werden dadurch gelöst, dass eine Lampe (2) mit einem Lichtsensor (1) baulich vereinigt ist und mindestens einen zusätzlichen elektrischen Anschluss (10) aufweist, der mit dem Lichtsensor verbunden ist.

## Beschreibung

Die Erfindung betrifft eine Fahrzeugbeleuchtung mit einer Einrichtung zum Verhindern der Blendwirkung, enthaltend mindestens eine Leuchte mit mindestens einer Lampe mit mindestens zwei elektrischen Anschlüssen, einen Lichtsensor zum Empfangen von Fremdlicht von einer Leuchte eines anderen Fahrzeuges und eine Schaltungsanordnung zum Abschalten oder Reduzieren der Leuchtstärke der Lampe in Abhängigkeit des vom Lichtsensor empfangenen Fremdlichts.

Es sind verschiedene Einrichtungen bekannt, die automatisch auf Fahrzeuglampen einwirken, um eine von diesen Lampen ausgehende Blendwirkung auf entgegenkommende, vorausfahrende oder nachfolgende Fahrzeuge zu eliminieren oder zumindest zu reduzieren. So ist zum Beispiel in der Patentanmeldung DE 35 28 220 eine Einrichtung an einem Fahrzeug zur Verhinderung der Blendwirkung einer eingebauten Leuchte offenbart. Diese Einrichtung ist dadurch gekennzeichnet, dass mindestens ein Lichtempfangselement mit zur Abstrahlrichtung der Leuchte entgegengesetzter Leuchteinfallsrichtung am Fahrzeug angeordnet ist, dass das Ausgangssignal des Lichtempfangselements einer Vergleichseinrichtung zugeführt ist, welche mit dem Stromkreis der Leuchte gekoppelt ist und beim Überschreiten einer vorgegebenen Schwelle durch das Ausgangssignal der Lichtempfangseinheit die Stromversorgung der Leuchte unterbricht bzw. verringert.

Ein Problem bei solchen Einrichtungen besteht darin, das Lichtempfangselement richtig auszurichten. Ist das Lichtempfangselement nicht korrekt ausgerichtet, spricht die Einrichtung in Situationen, in denen eine Blendwirkung besteht, nicht an oder es kommt vor, dass sie in Situationen anspricht, in welchen dies nicht erwünscht ist.

Ein weiteres Problem bei solchen Einrichtungen besteht insbesondere in der Anordnung des Lichtempfangselements am Fahrzeug. Wird dieses nämlich aussen am Fahrzeug montiert, kann zwar theoretisch das einfallende Fremdlicht einwandfrei empfangen werden, jedoch wird das Lichtempfangselement schon nach kurzer Zeit verschmutzt, was zwangsläufig zu Funktionsstörungen der Einrichtung führt.

Im oben erwähnten Dokument wird deshalb vorgeschlagen, das Lichtempfangselement hinter der Frontscheibe des Fahrzeuges anzuordnen. Dort ist es zwar vor Verschmutzungen weitgehend geschützt, jedoch bedingt eine solche Anordnung einen hohen Aufwand für die Verdrahtung. Im übrigen könnte das hinter der Frontscheibe montierte Lichtempfangselement zumindest ästhetisch störend wirken. Zudem besteht auch bei dieser Lösung das Problem der korrekten Ausrichtung des Lichtempfangselements. Ein weiterer Vorschlag des erwähnten Dokumentes geht dahin, das beispielsweise als Photodiode oder Photowiderstand ausgebildete Lichtempfangselement in eine Rückleuchtenkombination zu integrieren, indem dieses in die Schlussleuchtenabdeckung eingesetzt wird, oder indem eine Linse in den Kunststoff der Schlussleuchtenkombination eingeformt und die nach innen gerichtete Seite an eine Lichtleitfaser angekoppelt wird. Beide der zuletzt erwähnten Vorschläge bedingen aber konstruktive Anpassungen der Leuchte.

Die Patentanmeldung DE 34 16 164 betrifft eine Einrichtung zur Überwachung des Aussenlichts bei Fahrzeugen, welche mit einem Phototransistor arbeitet. In diesem Dokument wird vorgeschlagen, den Phototransistor im Scheinwerfer anzuordnen, wobei jedoch nicht näher erläutert wird, an welcher Stelle und wie er befestigt werden soll.

In der Patentschrift US 4 751 617 ist eine photooptische Einrichtung zur Verwendung mit einem Automobilscheinwerfer oder dergleichen angegeben, welche zur Überwachung dieses Scheinwerfers dient. Diese Einrichtung kann nachträglich in einen Scheinwerfer eingebaut werden, jedoch muss dazu eine Montageöffnung im Reflektor des Scheinwerfers angebracht werden und die Einrichtung wird durch relativ aufwendige Mittel in dieser Öffnung festgehalten und abgedichtet.

Es ist eine Aufgabe der vorliegenden Erfindung, eine Fahrzeugbeleuchtung mit einer Einrichtung zum Verhindern der Blendwirkung anzugeben, die einfach aufgebaut und ohne zusätzlichen Verdrahtungsaufwand einzubauen ist. Eine weitere Aufgabe der Erfindung besteht darin, eine Fahrzeugbeleuchtung mit einer Einrichtung zum Verhindern der Blendwirkung Lichtsensor zu schaffen, mit der ein Fahrzeug auch nachträglich ausgerüstet werden kann, ohne dass an einer Leuchte Änderungen vorgenommen werden müssen.

Diese Aufgabe wird durch eine Fahrzeugbeleuchtung der eingangs genannten Art gelöst, die dadurch gekennzeichnet ist, dass die Lampe mit dem Lichtsensor baulich vereinigt ist und mindestens einen weiteren elektrischen Anschluss aufweist, der mit dem Lichtsensor verbunden ist.

Durch diese Lösung wird es auch möglich, einen Nachrüstsatz anzubieten, der in einfachster Weise in ein bestehendes Fahrzeug eingebaut werden kann. Soll beispielsweise das Fahrzeug mit einer automatischen Einrichtung zum Abblenden der Scheinwerfer ausgestattet werden, braucht bloss eine der Scheinwerferlampen durch eine erfindungsgemässe, mit einem Lichtsensor baulich vereinigte Lampe ausgetauscht zu werden. Es versteht sich von selbst, dass dabei kein zusätzlicher Verdrahtungsaufwand entsteht. Dieses Prinzip kann sinngemäss auf Nebelscheinwerfer oder Nebelschlussleuchten übertragen werden, wobei diese beim Überschreiten einer vorgegebenen Fremdlicht-lntensität dunkler geschaltet oder ganz ausgeschaltet werden. Selbstverständlich kann in beiden Fällen nach dem Wegfallen des Fremdlicht-Einflusses der ursprünglich eingestellte Zustand, beispielsweise Fernlicht, gegebenenfalls nach einer Verzögerungszeit, automatisch wieder hergestellt werden. Änderungen an den Leuchten, wie Bohrungen zum Aufnehmen des Lichtsensors, sind unnötig.

Wird der Lichtsensor nach einer besondere Ausführungsart der Erfindung innerhalb des Lampenglases angeordnet, ergibt sich eine besonders einfache Konstruktion der Lampe. Die Anordnung des Lichtsensors ausserhalb des Lampenglases, wie sie nach einer weiteren Ausführungsart der Erfindung vorgeschlagen ist, bringt dagegen die Vorteile mit sich, dass der Lichtsensor durch die Lampe weniger thermisch belastet wird und dass er besonders einfach in der Nähe des Leuchtenglases angeordnet werden kann. Dieser letztgenannte Vorteil wird noch unterstützt, wenn nach einer weiteren Ausführungsart der Lichtsensor mit mindestens einer teleskopartig ausziehbaren Stütze am Lampensockel gehalten ist. Das nachträgliche Ausrüsten eines Fahrzeuges mit einer erfindungsgemässen Einrichtung wird zusätzlich erleichtert, wenn gemäss einer weiteren Ausführungsart der Erfindung die Schaltungsanordnung als steckbarer Adapter ausgebildet ist. Man muss dann nur noch eine der vorhandenen Lampen von ihrem Kabel trennen, durch eine erfindungsgemässe Lampe austauschen, den Adapter auf die Lampe aufstecken und mit dem Kabel verbinden.

Die Erfindung wird im folgenden anhand von Ausführungsbeispielen und unter Bezugnahme auf die beiliegenden Zeichnungen näher erläutert. Es zeigen:
- Figur 1: ein erstes Ausführungsbeispiel der Erfindung,
- Figur 2: ein zweites Ausführungsbeispiel der Erfindung und
- Figur 3: eine Ansicht in Richtung des Pfeils III in Figur 1 und 2.

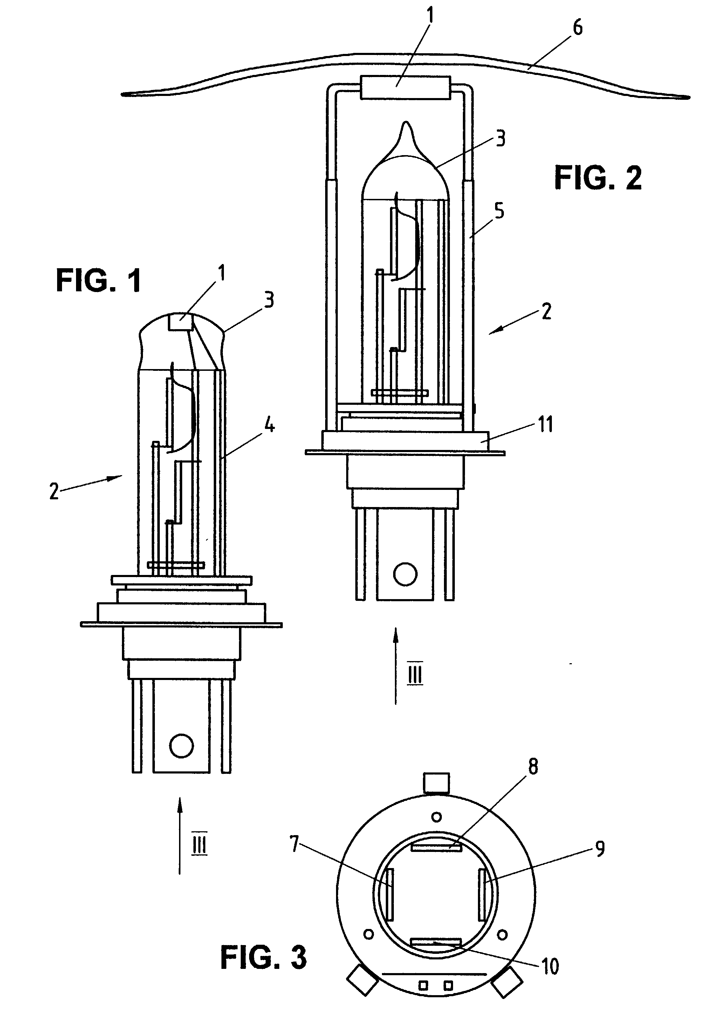

Bei dem in Figur 1 dargestellten ersten Ausführungsbeispiel ist der Lichtsensor 1 baulich mit einer Lampe 2 für einen Fahrzeugscheinwerfer vereinigt. Der Lichtsensor 1, der irgend ein bekanntes lichtempfindliches Bauteil wie Photodiode, Phototransistor oder Photowiderstand enthalten kann, ist innerhalb des Lampenglases 3 an der von den Anschlüssen 7-10 abgewandten Seite untergebracht. Der Lichtsensor 1 ist dabei so ausgerichtet, dass er kein von der Lampe selbst ausgestrahltes Licht direkt empfangen kann, jedoch möglichst viel Fremdlicht von den Scheinwerfern eines entgegenkommenden Fahrzeuges aufnimmt. Dazu kann er wie dargestellt in Fahrrichtung des Fahrzeuges, oder aber seitwärts gegen einen in der Zeichnung nicht dargestellten Reflektor ausgerichtet sein. Der Lichtsensor ist durch Stützen 4 getragen, wie sie in bekannter Weise auch zum Halten der Glühwendel verwendet werden. Die in diesem Ausführungsbeispiel gezeigte Anordnung des Lichtsensors kann auch bei einer sockellosen Glühlampe verwendet werden.

Beim zweiten Ausführungsbeispiel der Erfindung gemäss Figur 2 ist der Lichtsensor 1 ebenfalls mit einem Fahrzeugscheinwerfer vereinigt, jedoch ist er hier ausserhalb des Lampenglases 3 an der von den Anschlüssen 7-10 abgewandten Seite angeordnet. Der Lichtsensor 1 wird dabei von Stützen 5 getragen, die am Lampensockel 11 befestigt sind. Dieses Ausführungsbeispiel hat gegenüber demjenigen nach Figur 1 die Vorteile, dass der Lichtsensor 1 durch die Lampe 2 weniger erhitzt wird und dass er, weil er direkt hinter dem Leuchtenglas 6 sitzt, von aussen kommendes Fremdlicht direkt empfangen kann. Damit der Lichtsensor 1 nicht durch am Leuchtenglas 6 reflektiertes Licht der Lampe 2 gestört wird, ist es wichtig, dass er möglichst nahe am Leuchtenglas angeordnet ist. Dies wird in vorteilhafter Weise dadurch erreicht, dass die den Lichtsensor tragenden Stützen 5 aus teleskopartig ineinander verschiebbaren Teilen bestehen. Beim Montieren einer solchen Lampe geht man so vor, dass die Teleskopstützen ganz ausgezogen werden, bevor die Lampe in die Leuchte eingeführt wird. Die Länge der Teleskopstützen 5 ist dabei so bemessen, dass der Lichtsensor 1 am Leuchtenglas 6 anstösst, bevor der Lampensockel 11 seine endgültige Position erreicht hat. Beim weiteren Einschieben der Lampe in die Leuchte werden in der Folge die Teleskopstützen 5 zusammengeschoben, wobei der Lichtsensor in seiner Position am Leuchtenglas verbleibt. Durch diese Konstruktion kann eine solche Lampe auch nachträglich in eine Leuchte eingebaut werden, ohne dass an der Leuchte selbst Änderungen vorgenommen werden müssen und wobei der Lichtsensor in jedem Fall an der am besten geeigneten Stelle direkt am Leuchtenglas plaziert wird.

Figur 3 zeigt die Anschlussseite der Lampe, die bei beiden vorangehend beschriebenen Ausführungsbeispielen gleich aussieht. Es sind hier die bei derartigen Fahrzeuglampen üblicherweise vorhandenen Anschlussstifte zu erkennen, nämlich der Massestift 7, der Abblendstift 8 und der Fernlichtstift 9. Zusätzlich trägt der Sockel dieser Lampe einen vierten Anschlussstift, nämlich den mit dem Lichtsensor 1 verbundenen Sensorstift 10.

## Patentansprüche

1. Fahrzeugbeleuchtung mit einer Einrichtung zum Verhindern der Blendwirkung, enthaltend mindestens eine Leuchte mit mindestens einer Lampe mit mindestens zwei elektrischen Anschlüssen, einen Lichtsensor zum Empfangen von Fremdlicht von einer Leuchte eines anderen Fahrzeuges und eine Schaltungsanordnung zum Abschalten oder Reduzieren der Leuchtstärke der Lampe in Abhängigkeit des vom Lichtsensor empfangenen Fremdlichts, dadurch gekennzeichnet, dass die Lampe (2) mit dem Lichtsensor (1) baulich vereinigt ist und mindestens einen weiteren elektrischen Anschluss (10) aufweist, der mit dem Lichtsensor verbunden ist.

2. Fahrzeugbeleuchtung nach Anspruch 1, dadurch gekennzeichnet, dass die Leuchte ein Scheinwerfer oder ein Nebelscheinwerfer ist.

3. Fahrzeugbeleuchtung nach Anspruch 1 oder 2, dadurch gekennzeichnet, dass die Leuchte einen Nebelschlussleuchte ist.

4. Fahrzeugbeleuchtung nach einem der vorhergehenden Ansprüche, dadurch gekennzeichnet, dass der Lichtsensor (1) innerhalb des Lampenglases (3) angeordnet ist.

5. Fahrzeugbeleuchtung nach einem der Ansprüche 1 bis 3, dadurch gekennzeichnet, dass der Lichtsensor (1) ausserhalb des Lampenglases (3) angeordnet ist.

6. Fahrzeugbeleuchtung nach Anspruch 5, dadurch gekennzeichnet, dass der Lichtsensor (1) mit mindestens einer Stütze (5) mit dem Lampensokkel (11) verbunden ist.

7. Fahrzeugbeleuchtung nach Anspruch 6, dadurch gekennzeichnet, dass die Stütze (5) teleskopartig ausziehbar ist.

8. Fahrzeugbeleuchtung nach einem der vorhergehenden Ansprüche, dadurch gekennzeichnet, dass die Schaltungsanordnung als steckbarer Adapter ausgebildet ist, der direkt mit der Lampe verbunden ist.
